# EUROPÄISCHE PATENTANMELDUNG

(11) **EP 1 251 040 A2**
(43) Veröffentlichungstag der Anmeldung: **23.10.2002**
(21) Anmeldenummer: 02006635.3
(22) Anmeldetag: 25.03.2002
(51) Int. Cl.: B60R 21/20

(54) **Gassack-Modul**

(30) Priorität: 17.04.2001 DE 20106598 U
(71) Anmelder: TRW Occupant Restraint Systems GmbH & Co. KG, 73553 Alfdorf (DE)
(72) Erfinder: Lutz, Joachim, 73579 Schechingen (DE); Mohr, Robert, 71384 Weinstadt (DE)
(74) Vertreter: Sties, Jochen, Dipl.-Ing.

(57) **Zusammenfassung**

Ein Gassack-Modul (10; 10'; 110) für ein Fahrzeuginsassen-Rückhaltesystem, mit einem Gasgenerator (14; 14'; 114), einem Gassack (16; 16'; 116), der mittels eines Druckgasstromes (54; 54'; 154), der von dem Gasgenerator bereitgestellt werden kann, aufgeblasen werden kann, und einem Gehäuse (12; 12'; 112), das einen Generatorraum (20; 20'; 120) zur Aufnahme des Gasgenerators und einen Gassackraum (22; 22'; 122) zur Aufnahme des Gassackes aufweist, ist dadurch gekennzeichnet, daß zwischen Generatorraum und Gassackraum eine verformbare Trennwand mit Ausströmöffnungen (46; 46'; 146) vorgesehen ist, welche durch den Druckgasstrom aus einem Ruhezustand in einen Arbeitszustand verformt werden kann, in welchem sie einen Führungskanal (48; 48'; 148) für den dem Gasgenerator entströmenden Druckgasstrom (54; 54'; 154) bildet.

## Beschreibung

Die Erfindung betrifft ein Gassack-Modul für ein Fahrzeuginsassen-Rückhaltesystem, mit einem Gasgenerator, einem Gassack, der mittels eines Druckgasstromes, der von dem Gasgenerator bereitgestellt werden kann, aufgeblasen werden kann, und einem Gehäuse, das einen Generatorraum zur Aufnahme des Gasgenerators und einen Gassackraum zur Aufnahme des Gassackes aufweist. Die Erfindung betrifft außerdem eine Fahrzeugstruktur mit einem derartigen Gassackmodul.

Es ist erwünscht, die Ausbreitung des Gassackes derart zu steuern, daß sich der Gassack zunächst in einer bestimmten Richtung, beispielsweise nicht auf den Fahrzeuginsassen zu, sondern seitlich ausbreitet. Der Aufblasvorgang respektive die Ausbreitungsrichtung des Gassackes kann beispielsweise durch Führungsmittel für das ausströmende Gas gesteuert werden. In der US-A-5 988 677 ist ein Gassackmodul beschrieben, das ein derartiges Führungsmittel in Form eines am Generatorgehäuse ausgebildeten Domes aufweist, der sich vom Gasgenerator zur Abdeckung hin zwischen den Falten des gefalteten Gassackes erstreckt. Diese Gestaltung hat jedoch den Nachteil, daß der Dom den Raum für die Unterbringung des gefalteten Gassackpaketes verringert. Außerdem kann mit einem derartigen Dom die Entfaltungsrichtung des Gassackes nur eingeschränkt gesteuert werden, da der Dom nicht über die Außenkontur des Gassackmodules hinausragen kann.

Aufgabe der Erfindung ist es daher, ein platzsparendes Gassackmodul zu schaffen, bei dem die Ausbreitungsrichtung des Gassackes beim Aufblasen gesteuert werden kann.

Zu diesem Zweck ist bei einem Gassackmodul der eingangs genannten Art vorgesehen, daß zwischen Generatorraum und Gassackraum eine verformbare Trennwand mit Ausströmöffnungen vorgesehen ist, welche durch den Druckgasstrom aus einem Ruhezustand in einen Arbeitszustand verformt werden kann, in welchem sie einen Führungskanal für das dem Gasgenerator entströmende Druckgas bildet. Im Ruhezustand hat das Führungsmittel nur einen minimalen Platzbedarf, so daß der zur Verfügung stehende Bauraum zur Unterbringung des Gassackes verwendet werden kann. Beim Aufblasen des Gassackes wird die Trennwand durch den Gasstrom so verformt, daß sie eine Führungskanal bildet, der auch in den Gassackraum hinein- und sogar über das Gehäuse des Gassack-Modules hinausragen kann. Mit Hilfe des Führungskanals kann der Gasstrom in eine bestimmte Richtung geführt werden und somit eine gezielte Ausbreitung des Gassackes in einer vorbestimmten Art erreicht werden.

Weitere vorteilhafte Ausgestaltungen der Erfindung ergeben sich aus den Unteransprüchen.

Die Erfindung wird nachfolgend anhand bevorzugter Ausführungsformen ausführlich beschrieben. Dabei wird Bezug genommen auf die beigefügten Zeichnungen, in welchen zeigt:
- Figur 1 einen Querschnitt durch ein Gassackmodul gemäß einer ersten Ausführungsform der Erfindung im nichtausgelösten Zustand;
- Figur 2 einen Querschnitt durch das Gassackmodul aus Figur 1 im ausgelösten Zustand;
- Figur 3 einen Querschnitt durch ein Gassackmodul gemäß einer zweiten Ausführungsform der Erfindung im nichtausgelösten Zustand;
- Figur 4 einen Querschnitt ein Gassackmodul gemäß einer dritten Ausführungsform der Erfindung im ausgelösten Zustand;
- Figur 5 eine perspektivische Ansicht des Gehäuses des Gassack-Moduls aus Figur 4 mit Diffusorblech im nichtausgelösten Zustand; und
- Figur 6 eine perspektivische Ansicht des Gehäuses mit Diffusorblech aus Figur 5 im ausgelösten Zustand.

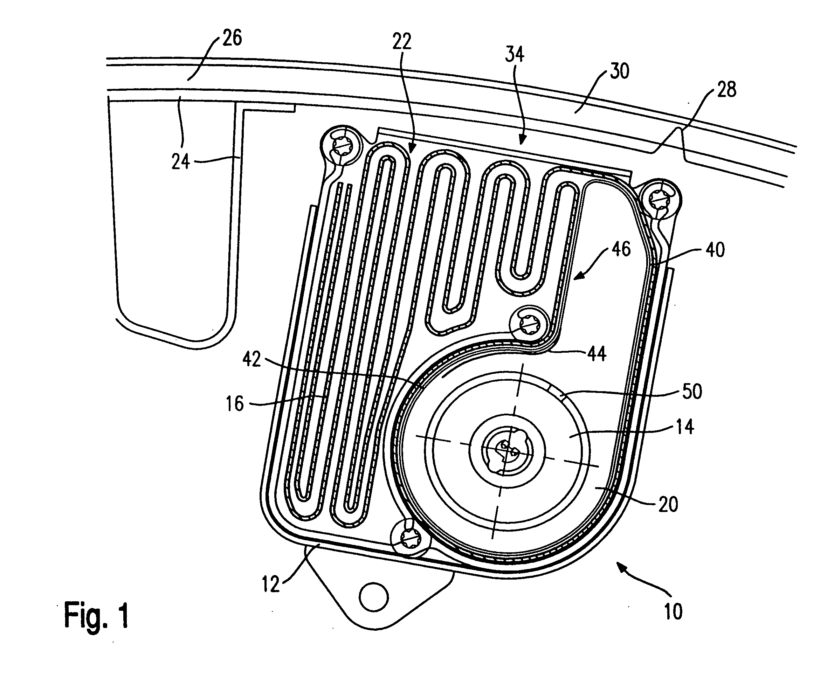

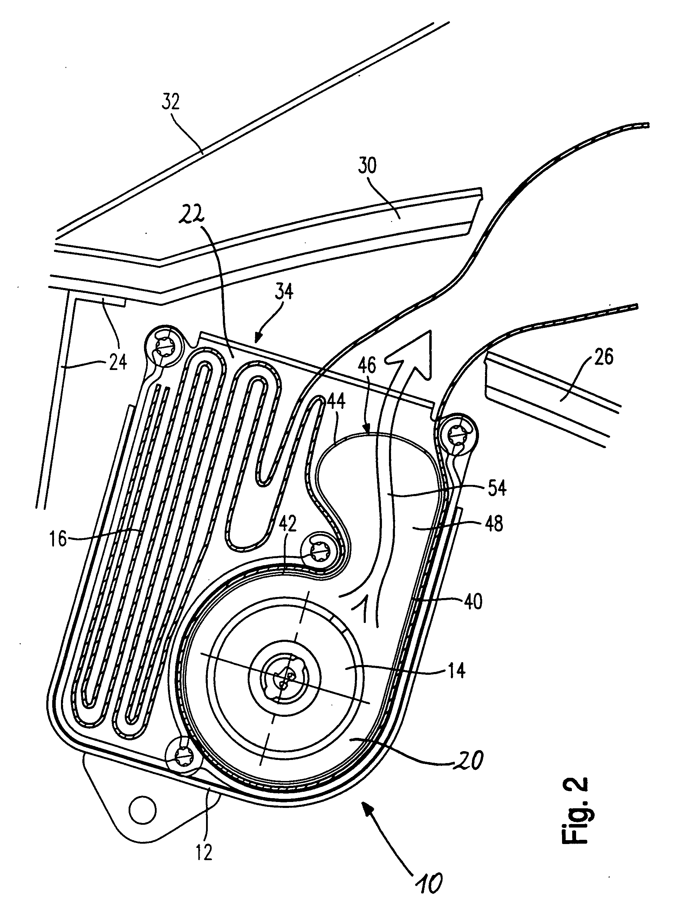

Das Gassackmodul 10 in den Figuren 1 und 2 weist ein Gehäuse 12 auf, das einen rohrförmigen Gasgenerator 14 und einen gefalteten Gassack 16 enthält. Das Gassackmodul 10 ist in eine Armaturentafel 24 eines Kraftfahrzeugs eingebaut, und zwar auf der Beifahrerseite. Die Armaturentafel ist mit einer Verkleidung 26 versehen, die eine Sollbruchstelle 28 aufweist, so daß sich eine Klappe 30 in der Verkleidung 26 zu einer Frontscheibe 32 hin öffnen kann. Die Klappe 30 bildet eine Abdeckung für eine Öffnung 34 im Gehäuse 12 des Gassackmoduls, durch welche der Gassack 16 austreten kann.

Das Gehäuse 12 besteht vorteilhafterweise aus einem stranggepreßten Aluminiumprofil. Das Innere des Gehäuses 12 ist in einen Generatorraum 20 und einen Gassackraum 22 geteilt. Im Gehäuse 12 ist zwischen dem Generatorraum 20 und dem Gassackraum 22 eine Trennwand in Form eines deformierbaren Diffusorblechs 40 vorgesehen. Das Diffusorblech 40 umschließt den Generator 14, so daß keine zusätzliche Befestigung des Diffusorbleches 40 im Modulgehäuse 12 notwendig ist.

Das Diffusorblech 40 besteht in dieser Ausführungsfom aus einem Blechstreifen, beispielsweise aus Aluminium oder Stahlblech, mit einer Stärke von weniger als einem Millimeter. Das Diffusorblech hat ein erstes Ende 42 und ein zweites Ende, das eine Lasche 44 bildet, die unter das erste Ende 42 eingeschoben ist. Die Lasche 44 kann bereits vor Einbau des Diffusorblechs 40 eingesteckt sein, so daß das Diffusorblech 40 in der gezeigten Form ein Vormontagebauteil bildet. Im Bereich des zweiten Endes ist das Diffusorblech 40 mit Ausströmöffnungen 46 versehen, die in den Gassackraum 22 weisen.

Vorteilerhafterweise umschließt der Gassack 16 das Diffusorblech 40 vollständig, so daß der Gassack 16 einerseits im Gehäuse 12 befestigt ist, andererseits auch keine Abdichtung zwischen dem Gasgenerator 14 und dem Gassack 16 erforderlich ist. Das Diffusorblech 40 bildet andererseits wiederum eine Schutzabdeckung für die umgebende Gewebelage, beispielsweise gegen heiße Verbrennungsrückstände, die vom Gasgenerator ausgestoßen werden können.

Bei der Auslösung des Gassackmoduls 10 wird der Gasgenerator 14 gezündet. Das von ihm erzeugte Druckgas entweicht durch eine Öffnung 50 im Gasgenerator und strömt in den Generatorraum 20 zwischen Gasgenerator und Diffusorblech 40. Durch den Druck des ausströmenden Gases wird die Lasche 44 herausgezogen und verformt, so daß das Diffusorblech 40 einen Führungskanal 48 ausbildet, der in den Gassackraum 22 ragt und sich zur Austrittsöffnung 34 hin erweitert (Figur 2).

Alternativ kann das Diffusorblech 40 auch geschlossen sein, d.h. das erste Ende 42 und die Lasche 44 sind fest miteinander verbunden, beispielsweise durch Verschweißen, oder das Blech kann aus einem Rohr hergestellt sein. In diesen Fällen kann die Lasche 44 nicht herausgezogen werden, sondern der Führungskanal 48 entsteht allein durch plastische Verformung des Diffusorbleches 40 infolge des Druckes des ausströmenden Gases.

Der Führungskanal 48 leitet den Druckgasstrom 54 vom Gasgenerator 14 in den Gassack, wobei die Strömung direkt in die gewünschte Entfaltungsrichtung des Gassackes 16, nämlich weg von der Windschutzscheibe 32, gerichtet ist. Da sich zwischen der Abdeckung und dem Diffusorblech 40 nur eine Gewebelage des Gassackes 16 befindet, wird der Gassack 16 nicht komplett als gefaltetes Paket ausgestoßen, sondern es werden zuerst nur wenige Gewebelagen aus dem gefalteten Gassackpaket herausgedrückt. Anschließend wird der Rest des gefalteten Gassackes nachgezogen. Dies hat den Vorteil, daß keine großen Massen in Bewegung sind, sondern nur wenige Gewebelagen.

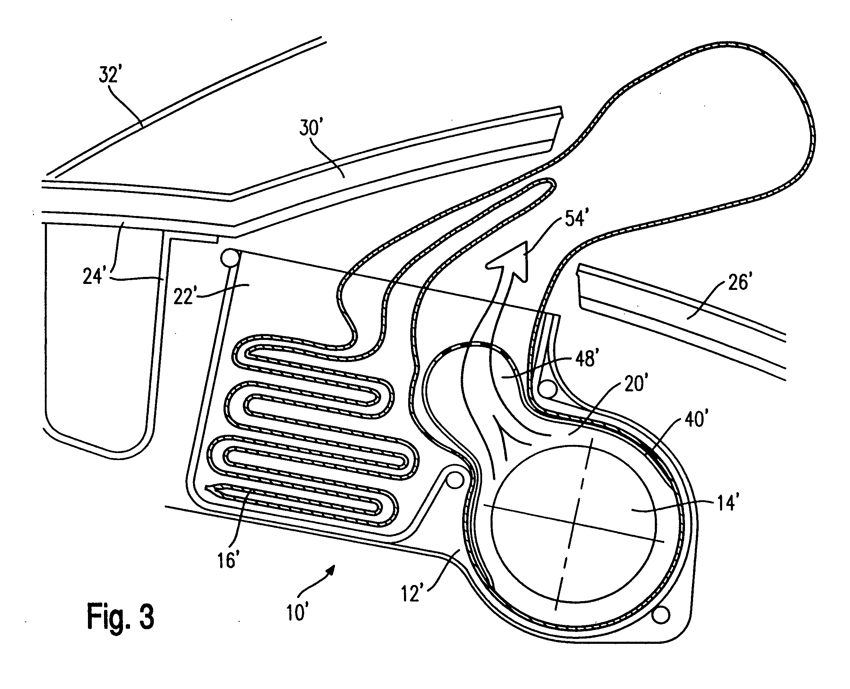

Abbildung 3 zeigt eine zweite Ausführungsform eines Gassackmoduls 10', bei der der Generatorraum 20' im Vergleich zur ersten Ausführungsform weiter seitlich angeordnet ist, wodurch das Modul 10' in der Armaturentafel 24 einen breiteren, aber weniger tiefen Einbauraum beansprucht. Hier wird besonders deutlich, daß der durch die herausgezogene Lasche 44' gebildete Kanal 48' den Gasstrom 54' in die gewünschte Richtung lenken kann.

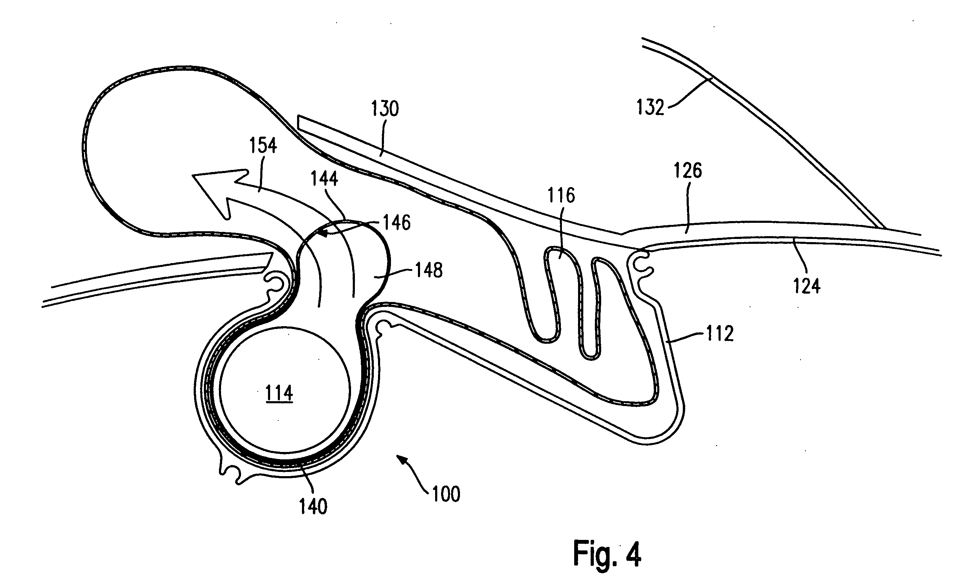

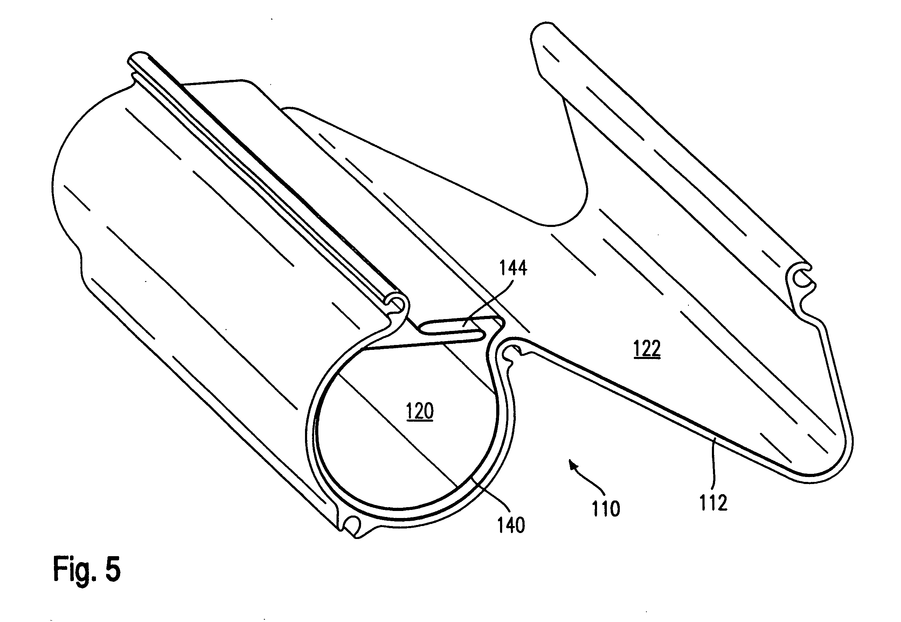

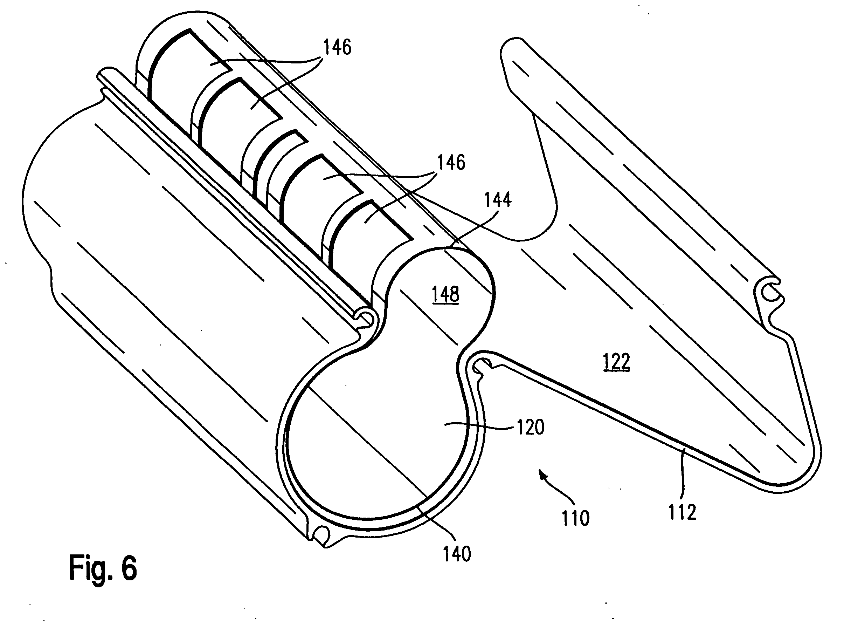

Eine weitere Ausführungsform des erfindungsgemäßen Gassackmoduls ist in den Figuren 4 und 5 gezeigt, wobei für bereits bekannte Bauteile um 100 erhöhte Bezugszeichen verwendet werden. Die Darstellung in den Figuren 5 und 6 beschränkt sich auf die wesentlichen Elemente, nämlich ein Gehäuse 112 und ein Diffusorblech 140. Das Gehäuse 112 besteht wiederum aus einem stranggepreßten Profil mit einem Generatorraum 120 und einem Gassackraum 122. In den Generatorraum 120 ist das Diffusorblech 140 eingelegt, das wie in den bereits beschriebenen Ausführungsformen einen Gasgenerator 114 umschließt. Im Übergangsbereich 126 zwischen dem Generatorraum 120 und dem Gassackraum 122 weist das Diffusorblech 140 einen gefalteten Abschnitt 144 auf, der mit Ausströmöffnungen 146 versehen ist.

Bei der Auslösung des Gassackmoduls 110 wird der gefaltete Abschnitt 144 durch den Druck des Gasstromes entfaltet, bis er einen Führungskanal 148 bildet, der aus dem Gehäuse 112 ragt und den Gasstrom 154 in die vorgesehene Richtung, nämlich von der Frontscheibe 132 weg, zum Fahrzeuginsassen hin leitet. Durch den gefalteten Abschnitt 144 wird im Inneren des Modulgehäuses 112 eine besonders hohe Platzersparnis erzielt. Dennoch wird nach der Auslösung des Gassackmoduls die gewünschte Umlenkung des Gasstroms 154 erreicht, die ohne das Diffusorblech 140 nicht möglich wäre.

## Patentansprüche

1. Gassack-Modul (10; 10'; 110) für ein Fahrzeuginsassen-Rückhaltesystem, mit einem Gasgenerator (14; 14'; 114), einem Gassack (16; 16'; 116), der mittels eines Druckgasstromes (54; 54'; 154), der von dem Gasgenerator bereitgestellt werden kann, aufgeblasen werden kann, und einem Gehäuse (12; 12'; 112), das einen Generatorraum (20; 20'; 120) zur Aufnahme des Gasgenerators und einen Gassackraum (22; 22'; 122) zur Aufnahme des Gassackes aufweist, **dadurch gekennzeichnet, daß** zwischen Generatorraum und Gassackraum eine verformbare Trennwand mit Ausströmöffnungen (46; 46'; 146) vorgesehen ist, welche durch den Druckgasstrom aus einem Ruhezustand in einen Arbeitszustand verformt werden kann, in welchem sie einen Führungskanal (48; 48'; 148) für den dem Gasgenerator entströmenden Druckgasstrom (54; 54'; 154) bildet.

2. Gassack-Modul nach Anspruch 1, **dadurch gekennzeichnet, daß** als Trennwand ein verformbares Diffusorblech (40; 40'; 140) vorgesehen ist

3. Gassack-Modul nach Anspruch 1 oder 2, **dadurch gekennzeichnet, daß** die Trennwand den Gasgenerator (14; 14'; 114) umschließt.

4. Gassack-Modul nach einem der vorhergehenden Ansprüche, **dadurch gekennzeichnet, daß** eine Abdeckung (30; 30') vorgesehen ist, die das Gehäuse (12; 12') nach außen abschließt und eine Öffnungslinie (28; 28') aufweist, und daß der Führungskanal (48; 48') den Druckgasstrom (54; 54') zur Öffnungslinie hin leitet.

5. Gassack-Modul nach Anspruch 4, **dadurch gekennzeichnet, daß** zwischen der Trennwand und der Abdeckung (30) nur eine Gewebelage des Gassackes (16) angeordnet ist.

6. Fahrzeugstruktur mit einer Windschutzscheibe (32; 32'; 132), einem Armaturenbrett (24; 24'; 124) und einem in das Armaturenbrett eingebauten Gassack-Modul (10; 10'; 110) nach einem der vorhergehenden Ansprüche, wobei der Führungskanal (48; 48'; 148) den Gasstrom (54; 54'; 154) von der Windschutzscheibe weg leitet.
